(19) **Europäisches Patentamt / European Patent Office / Office européen des brevets**

(11) **EP 2 574 054 B1**

(12) **EUROPEAN PATENT SPECIFICATION**

(45) Date of publication and mention
of the grant of the patent:
**27.07.2016 Bulletin 2016/30**

(21) Application number: **11783108.1**

(22) Date of filing: **20.05.2011**

(51) Int Cl.:
*H04N 21/43* (2011.01)       *H04N 21/488* (2011.01)
*H04N 21/2187* (2011.01)       *H04N 21/2343* (2011.01)

(86) International application number:
**PCT/ES2011/000166**

(87) International publication number:
**WO 2011/144775 (24.11.2011 Gazette 2011/47)**

(54) **METHOD FOR SYNCHRONISING SUBTITLES WITH AUDIO FOR LIVE SUBTITLING**

VERFAHREN ZUR AUDIOSYNCHRONISATION VON UNTERTITELN FÜR LIVE-UNTERTITELUNG

PROCÉDÉ POUR SYNCHRONISER DES SOUS-TITRES ET DE L'AUDIO LORS DU SOUS-TITRAGE EN DIRECT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.05.2010 ES 201030758**

(43) Date of publication of application:
**27.03.2013 Bulletin 2013/13**

(73) Proprietor: **Universidad Carlos III de Madrid 28918 Leganés (ES)**

(72) Inventors:
• **DE CASTRO ÁLVAREZ, Mercedes**
  28918 Leganés (ES)
• **DE PEDRO SASTRE, Manuel**
  28918 Leganés (ES)
• **RUIZ MEZCUA, María Belén**
  28918 Leganés (ES)
• **JIMÉNEZ DORADO, Javier**
  28918 Leganés (ES)

(74) Representative: **Carpintero Lopez, Francisco Herrero & Asociados, S.L. Alcalá 35 28014 Madrid (ES)**

(56) References cited:
EP-A1- 1 909 278       JP-A- 2006 211 636
JP-A- 2010 081 141       US-A1- 2004 168 203
US-A1- 2005 185 929

• Pablo Romero-Fresco: "More haste less speed: Edited versus verbatim respoken subtitles", Vigo International Journal of Applied Linguistics, No. 6:, 1 January 2009 (2009-01-01), pages 109-134, XP055089300, Vigo, Spain Retrieved from the Internet: URL:http://webs.uvigo.es/vialjournal/pdf/Vial-2009-Article6.pdf [retrieved on 2013-11-20]
• AKIO ANDO ET AL: "Real-Time Transcription System for Simultaneous Subtitling of Japanese Broadcast News Programs", IEEE TRANSACTIONS ON BROADCASTING, IEEE SERVICE CENTER, PISCATAWAY, NJ, US, vol. 46, no. 3, 1 September 2000 (2000-09-01), XP011006130, ISSN: 0018-9316
• MATSUMURA K ET AL: "Personalization of broadcast programs using synchronized internet content", 2010 DIGEST OF TECHNICAL PAPERS / INTERNATIONAL CONFERENCE ON CONSUMER ELECTRONICS (ICCE 2010) : LAS VEGAS, NEVADA, USA, 9 - 13 JANUARY 2010 / [IEEE CONSUMER ELECTRONICS SOCIETY], IEEE, PISCATAWAY, NJ, USA, 9 January 2010 (2010-01-09), pages 145-146, XP031640972, ISBN: 978-1-4244-4314-7

**Description**

Technical Field of the Invention

The present invention is applicable in the field of subtitle generation for live multimedia events, for example live television or radio programs, for their real time viewing and synchronized with both audio and video.

Background of the Invention

Subtitles are necessary for people with hearing problems or people who need certain help in understanding the language as a way of accessing the audio content of multimedia events supplied through a wide range of devices (television sets, 3G mobile telephones, computers,...). Subtitles are also necessary when experiencing multimedia content in loud environments or locations where sound must be deactivated.

Although subtitling events that are not live is common practice nowadays, subtitling live events is less frequent due to the inherent complexity of current technology. The real time subtitling of audiovisual events is a multidisciplinary investigation that covers technologies from the fields of automatic speech recognition, computer science and network packet transmission and broadcasting. In live events in which subtitles are provided on an auxiliary screen but the video and audio are experienced directly, there is no opportunity to manage the subtitle delay. It takes time to create subtitles from speech, regardless of the method used for the audio to text transcription. Under the best conditions, the delay in creating text subtitles can be several seconds. Any method which tries to deal with the problem of the delay between audio and subtitles must provide a method for determining the timing between an audio fragment and the subtitles generated from it.

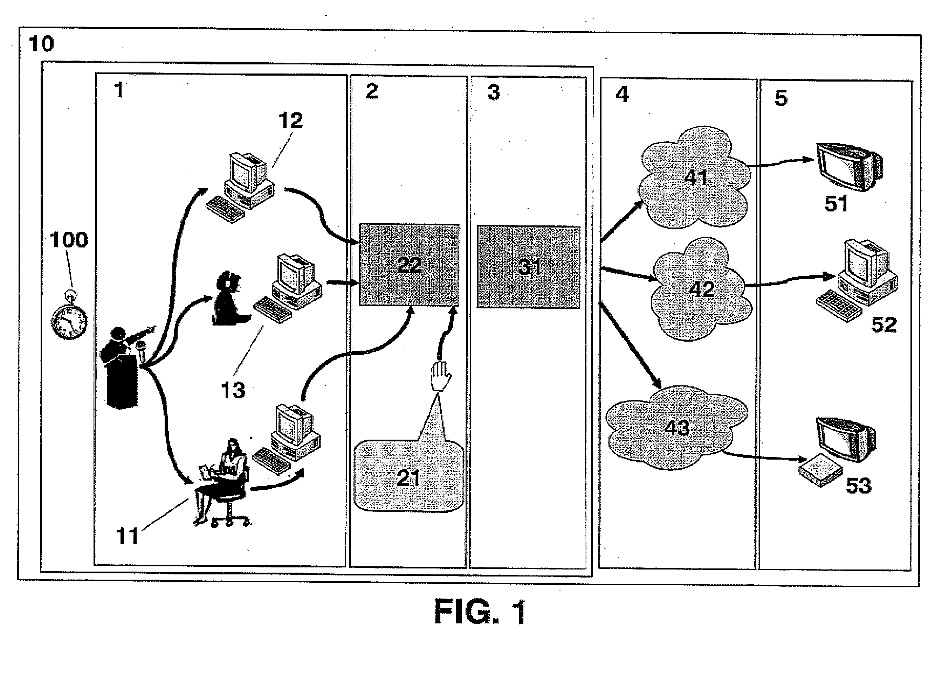

In the current state of the art, for subtitle generation in live television programs there is always a significant and variable delay between the audio and the moment in time in which the corresponding subtitles are ready. As a result, the subtitles are shown on the user's screen a variable number of seconds later and therefore in a manner that is not synchronized with the audio/video. To better understand the processes involved in live subtitling (10), Figure 1 shows the relevant steps:

Step 1)
Audio transcription (1): the immediate transcription of speech from one or several speakers to text.
Step 2)
Subtitle generation (2): the subtitle generation from text.
Steps 3 and 4)
Packetizing (3) and transmitting/broadcasting (4) through multimedia systems, for example, digital terrestrial television (41), Internet (42), Internet protocol television (43), etc.
Step 5)
Receiving and presenting (5) on the user's screen in, for example, a television receiver (51), a computer (52), a 3G mobile telephone or a conventional television with an IPTV encoder (53), to mention just a few.

In live subtitling generation environments, the audio transcription process (1) supplies the corresponding text several seconds after having received the speech fragment. The real time speech to text transcription is the original cause of subtitle delays and is very difficult to minimize. In the recent past and still today, the main approach in audio to text transcription (1) from speech was to use shorthand writing (11) in which the text is manually transcribed from audio by shorthand typists. Although the quality and speed of shorthand writing (11) are good, the cost of this process and the low availability of shorthand typists make it difficult for it to become a widespread practice in the massive subtitling of events in real time. Another alternative is to use ASR or automatic speech recognition engines (12) applied to the audio of the speaker either directly or through an intermediate respeaker (13) for automatically recognizing words and sentences with minimal human intervention. The main drawbacks of subtitling with current ASR technology are the delays introduced in the subtitles with respect to the original video and audio streams, the speech recognition error rates and the need to train the system for the speaker's voice and vocabulary. In practice, ASR can be used with the aid of a human operator who manipulates the outgoing text to improve or correct the subtitles. In fact, for live television subtitling, the use of respeaking and manipulation is common practice. The use of ASR directly without an intermediate respeaker entails either applying a speaker-independent ASR to any voice in the audio signal, or applying a speaker-dependent ASR previously trained for the different voices in the audio signal. Respeaking-based ASR in which a person speaks to a speaker-dependent ASR, trying to repeat what it is hearing, is one of the most widely used approaches today in real time television broadcasting worldwide, for example, in the United Kingdom or Spain. Stenography has been and is still widely used for real time subtitling, for example in the United States, in connection with a computer in which a software application translates the stenographic symbols into text. There are other rather uncommon methods but they are sometimes used for real time subtitling, such as typing directly by means of a keyboard or using a syllabic keyboard such as Veyboard™.

For subtitling generation (2), the subtitles are created from the transcribed text fragments received from the audio transcription sub-system (1). The subtitling generation sub-system (2) allows manual correction and formatting (21), for example, assigning colors to the text fragments depending on the speaker or context information, etc. Final subtitles are supplied by means of the live subtitling sub-system (22) together with other important information for their final presentation, such as the duration (time the subtitle remains on the screen), color, on-screen position, etc.

The subsequent process of packetizing video, audio and subtitle streams (3) generates transport stream packets (31) which are sent through transmission systems (4): for example through digital or IP television. Each transmitted packet contains, in addition to the payload and regardless of its type (video, audio or data), an indication of a time for the on-screen presentation (presentation_time_stamp), which is used on the receiving side for a synchronized presentation of packets belonging to the different streams of a television channel. Within the transport stream packets (31) there is also a global clock reference (100) for time synchronization, such that all the presentation time stamps refer to the same common clock reference.

It is important to understand that these presentation time stamps are calculated on the emitting side according to the real time clock (100) of the system and correspond to the moment in time in which the transport stream packets (31) are created. The result is that the delays between audio/video and subtitles are maintained, i.e., the audio and video packets have presentation time stamps preceding in time the presentation time stamps of their corresponding subtitles. On the receiving side, the user only detects this lack of alignment between the streams upon activating the subtitles. While the audio and video streams are synchronized with one another, the subtitles are available several seconds later and never correspond with the audio and video on the screen.

Patent document JP 2006 211636 discloses an image and subtitle synchronizing device where the video signal is delayed for a predetermined fixed delay time by a video fixed delay unit, while the subtitle signal is delayed by a variable delay time corresponding to the subtitle signal by a subtitle variable delay unit 65. The video signal and the subtitle signal are combined in a picture synthesizing unit.

Patent document JP 2010 081141 discloses a closed caption system and method including a caption PTS setting means for setting the value of PTS of caption data, by subtracting the value at least for the difference between encoding time of data and encoding time of the caption data.

An article by Pablo Romero-Fresco entitled "More haste less speed: Edited versus verbatim respoken subtitles", Vigo International Journal of Applied Linguistics, No 6: 1 January 2009 (2009-01-01), pages 109-134, XP055089300, Vigo, Spain, discloses information on the delays introduced by humans in respeaking and gives indications about usual delay values.

Brief Description of the Invention

The present invention serves to solve the aforementioned problem concerning the desynchronization between audio and subtitles in real time subtitling, compensating for the individual delays of the subtitles for the purpose of achieving an effective resynchronization of audio and subtitle streams before they are presented to the user. The present proposal describes an end-to-end system which allows synchronizing live audio/video and subtitles.

In live subtitling scenarios, when an audiovisual event (for example, a live television program, a radio program, a play or a speech in a conference) is digitized and transmitted to user receiving devices, it is possible to compensate for the delay, introduced mainly by the audio transcription process, between the original audio and the corresponding subtitles. The fact that there is a transmission phase (through a communication network) and a presentation phase (in the receiver) in the real time transmission of live events, such as in Internet protocol television (IPTV) or digital terrestrial television (TDT) broadcasting, offers the chance to handle the process from end-to-end, which finally allows presenting synchronized video/audio/subtitles in a presentation device (for example, an electronic display device). This entails delaying the audio and video with respect to the subtitles at some point of the process.

In the context of the invention, the transport stream uses a communications protocol for audio, video and data (for example, subtitles, Teletext,...), constituting a type of digital container format encapsulating packetized elementary streams for said audio/video and data, and other additional information. A transport stream example is specified in MPEG-2 Part 1, Systems (standard ISO/IEC 13818-1). The transport stream is used in broadcasting applications such as DVB (digital video broadcasting) for digital terrestrial television (DVB-T), cable system (DVB-C), satellite system (DVB-S), or in IP based networks (DVB-IPTV), among others. The MPEG transport stream is similar to the MPEG program stream although the former is for transmitting data in which a data loss is probable, whereas the latter is designed for more reliable means such as DVD. The transport stream combines one or more programs with one or more independent time bases in a single stream.

Audio and video data can be coded as described in ITU-T Rec. H.262 | ISO/IEC 13818-2 and ISO/IEC 13818-3. The resulting compressed elementary audio and video streams are packetized to produce packetized elementary stream (PES) packets, as specified in MPEG-2 Part 1, Systems (standard ISO/IEC 13818-1). The elementary streams forming a program are formed by PES packets and share a common time base.

Generally, for any applicable digital broadcasting scenario (multimedia, television or radio), transport streams are logically constructed from elementary stream packets (for example, PES packets specified in MPEG-2 Part 1), which are the data structures used for transporting elementary stream data. This includes the elementary streams of the transport stream containing subtitle packets for transporting subtitles.

An elementary stream packet consists of a packet header, including a time reference, followed by a number of contiguous bytes belonging to the elementary data stream. Said time reference relates to the common synchronization reference transported in the transport stream. According to this time reference, the end-to-end delay from the signal input to a coder to the signal output from a decoder is constant.

A digital receiving device can be a digital television or radio receiving device. Digital radio technologies for broadcasting audio by means of modulated digital signal transport are based on standards, including digital television broadcasting. A digital television receiving device can be a digital terrestrial television decoding module or an integrated TDT receiving terminal, user equipment suitable for receiving television content by IP or digital multimedia broadcasting, or a digital media receiver connected to a home network supporting live television control (for example, from a computer).

A multimedia storage medium can be a disc storage medium or a media server. A multimedia distribution network can be a digital terrestrial television broadcasting network, an IP television transmitting network, or generally an IP switched network providing websites with television channels.

According to one aspect of the invention, a method is provided for synchronizing subtitles with audio in live subtitling systems, which generates at least one subtitle i from at least one transcription block $T_j$ corresponding to an audio fragment j and comprising the following steps:

- determining an individual subtitle delay $\Delta t_i$ of each subtitle i;
- creating a subtitle unit $S_j$ comprising the subtitle i and the individual subtitle delay $\Delta t_i$;
- putting each subtitle unit $S_i$ together with a configurable associated shift delay REST in at least one subtitle PES packet, which has a presentation time stamp $PTS_i$, said subtitle PES packets being part of an extended transport stream including at least one audio packet containing the audio fragment j and a presentation time stamp $PTS_j$.
- synchronizing subtitle PES packets with audio packets creating a synchronized transport stream comprising all the packets of the extended transport stream delayed a time depending on the configurable associated shift delay REST.

In another aspect of the invention, when the subtitle synchronization is performed for being displayed immediately in a presentation device, in the synchronization of subtitle PES packets with audio packets each subtitle PES packet is delayed by associating it with a presentation time stamp in the synchronized transport stream which is equal to $PTS_i$-$\Delta t_i$+REST, and delaying each audio packet by associating it with a presentation time stamp in the synchronized transport stream which is equal to $PTS_j$+REST, $PTS_i$ and $PTS_j$ being the presentation time stamps in the extended transport stream and REST being

The main advantages of the described solution are:

a) It provides a practical approach to improve understanding of live subtitled events by means of compensating for the annoying effects of simultaneously receiving non-synchronized inputs (for example, audio and subtitles). This can be critical for people with hearing problems and people with limited skill in a non-native language as well as in environments in which audio must be deactivated.

b) The described solution allows its application as an option that can be selected by the user. This allows not affecting people who are not interested in synchronized subtitles.

c) The implementation of the solution before the transmission phase does not affect current receivers.

d) Additional bandwidth is not required in implementing the solution on the receiving side or in the option of "quasi-live" broadcasting.

e) The proposed subtitle synchronizer can be incorporated in current technologies with minor modifications.

f) It provides a subtitle synchronizing mode when a live subtitled program is emitted again without any additional cost, both if this synchronization is performed in the moment of rebroadcasting and if it is performed in the moment of storage.

g) The use of a common format supporting a flexible mode that can adapt to multiple variants for its implementation in broadcasting television, cable, digital radio, IPTV, etc.

h) The described step to calculate individual subtitle delays for the proposed method allows its configuration and setting for being adapted to the real time subtitling tools, environments, television or radio program types and operators.

Description of the Drawings

To complete the description which is being made and for the purpose of aiding to better understand the features of the invention according to a preferred practical embodiment thereof, a set of drawings is attached to said description as an integral part thereof in which the following has been depicted by way of nonlimiting illustration:

Figure 1 shows an end-to-end live subtitling system as it is known in the state of the art.

Figure 2 shows a schematic block diagram of a live subtitling system according to a possible embodiment of the invention.

Figure 3 shows a time chart of a live subtitling scheme according to another possible embodiment of the invention for tracking individual subtitle delays for some particular cases: (A) 1-1 ratio between transcription blocks and subtitles, (B) 1-M ratio between transcription blocks and subtitles, (C) N-1 ratio between transcription blocks and subtitles.

Figure 4 shows a time chart of a live subtitling scheme according to another possible embodiment of the invention for tracking individual subtitle delays for some particular cases: (D) N-M ratio, N<M, between transcription blocks and subtitles and (E) N-M ratio, N>M, between transcription blocks and subtitles.

Figure 5 shows a time chart of an audio transcription sub-system for tracking individual subtitle delays when audio transcription is performed without human intervention according to a possible embodiment of the invention.

Figure 6 shows a time chart of an audio transcription sub-system for tracking individual subtitle delays when audio transcription is performed with human intervention according to another possible embodiment of the invention.

Figure 7 shows a schematic depiction of the steps and data streams for synchronizing subtitles at reception according to a possible embodiment of the invention.

Figure 8 shows a schematic depiction of the steps and data streams for synchronizing subtitles before transmission according to another possible embodiment of the invention.

Figure 9 shows a schematic depiction of the steps and data streams for synchronizing subtitles before storing them for subsequent television channel broadcasting/transmission/distribution according to an additional possible embodiment of the invention.

Figure 10 shows a state diagram with the possible reproduction modes for the synchronized reproduction of subtitles on the receiver side according to the embodiment of the invention shown in Figure 7.

Figure 11 shows a schematic depiction of the use of live and previously stored subtitled events for their off-line rebroadcasting or distribution where the subtitles are already synchronized according to another possible embodiment of the invention.

Detailed Description of the Invention

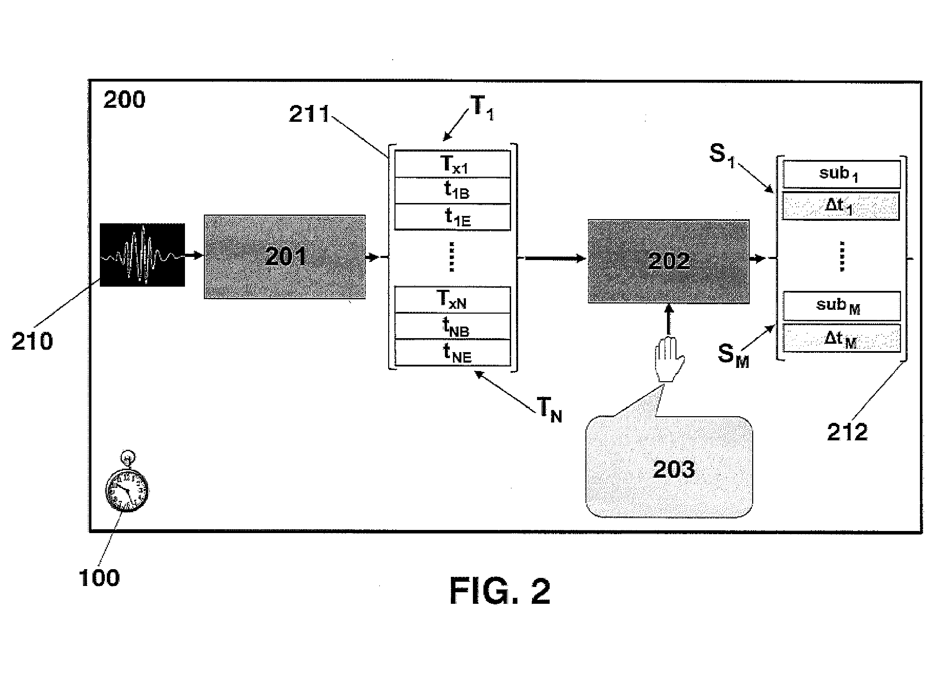

Figure 2 shows a live subtitling system 200, comprising an audio transcription sub-system 201 and a subtitle generation sub-system 202. The audio transcription sub-system 201 obtains text fragments from an audio source (which can be the audio signal associated with the video signal or another audio source such as respeaking) and assigns time references to those text fragments according to their corresponding original audio fragments according to a possible embodiment of the invention. The subtitle generation sub-system 202 generates subtitle units from one or many text fragments obtained in the audio transcription sub-system 201 and assigns an individual subtitle delay $\Delta t_i$ to each subtitle $i$, $i = 1..M$. These delays $\Delta t_i$ can be calculated by tracking the time used in each of these two sub-systems and estimating the time in which the corresponding audio occurred provided that it is not possible to precisely measure it.

The audio transcription sub-system 201 is responsible for obtaining a text transcription of an audio signal 210 and putting a time stamp on it for tracking the beginning of its corresponding audio fragment transcribed in a transcription block 211. The output of the audio transcription sub-system 201 is a group of $N \geq 1$ transcription blocks 211, in which each transcription block generated $T_j$, $j = 1... N$, contains a text fragment $T_{x_j}$ which is the transcription text corresponding to an audio fragment $j$ and is associated with the corresponding time stamps $t_{jB}$ and $t_{jE}$ where:

$t_{jB}$ is the time in which the audio fragment $j$ of the audio signal 210 begins;
$t_{jE}$ is the time in which the audio fragment $j$ ends.

When the audio transcription sub-system 201 cannot provide exact values for $t_{jB}$ and $t_{jE}$, it estimates them as explained below. The notation used for the estimated values is $ts_{jB}$ and $ts_{jE}$. Figure 2 refers to both $t_{jB}$ and $ts_{jB}$ as $t_{jB}$ for the sake of simplicity.

The subtitle generation sub-system 202 is responsible for creating subtitles from the transcription blocks 211 obtained in the preceding audio transcription sub-system 201. The subtitle generation sub-system 202 allows the input of formatting information 203 generated by means of manual correction and/or NLP (natural language processing tools) of the transcription blocks 211, editing, formatting and definition of duration (if they are not provided automatically), punctuation marks, etc. Therefore, the subtitle generation sub-system 202 also must evaluate the total time used in these tasks to calculate the final individual subtitle delay $\Delta ti$ between the moment in time in which the subtitle i is supplied, the present, and the time in the past in which the corresponding audio fragment j was produced. This sub-system also calculates the duration (length of time that a subtitle has to be present on screen in the terminal device of the user) of each subtitle created. Finally, the subtitle generation sub-system 202 supplies each subtitle i, for example, DVB image or text for Teletext subtitle, together with other additional subtitle information such as time of duration, color, on screen position, etc., forming a subtitle unit $S_i$ associated with its individual subtitle delay $\Delta t_i$, i = 1...M. Therefore, the output from the subtitle generation sub-system 202, and accordingly of the live subtitling system 200 as a whole, is a number $M \geq 1$ of subtitle units 212 in which each one comprises its respective individual delay $\Delta ti$ and formatting information 203.

The number of subtitle units 212 created from a group of transcription blocks 211 depends on the length of the text fragments $T_{xj}$ and the time stamps $t_{jB}$, $t_{jE}$ related to each transcription block $T_j$. It is necessary to consider what type of ratio exists between the transcription blocks and the subtitles for time tracking purposes:

1-1 ratio: A transcription block $T_j$ obtained in the audio transcription sub-system 201 can correspond to only one subtitle unit $S_i$ in the output of the subtitle generation sub-system 202.

1-M ratio: if a transcription block $T_j$ is very long, it can also correspond to two or more subtitles.

N-1 ratio: if the transcription blocks are very short and the time stamps are very close in time, it is possible to create a subtitle unit $S_i$ from more than one transcription block.

N-M ratio: generally, depending on the length and time stamps, a set of M subtitle units 212 can be generated from a group of N transcription blocks 211, where $N \geq M$ or N < M.

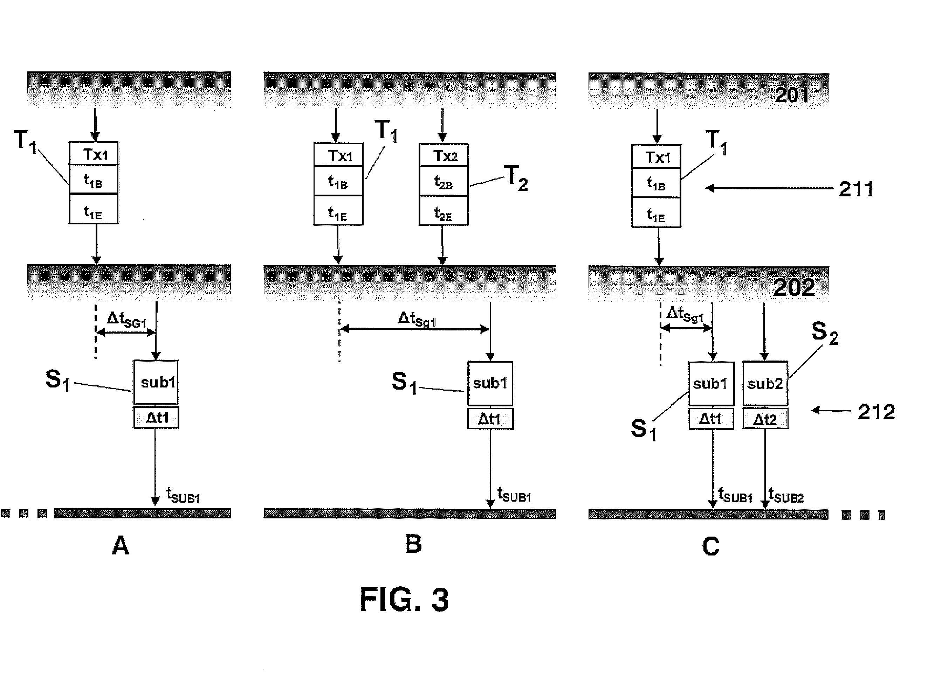

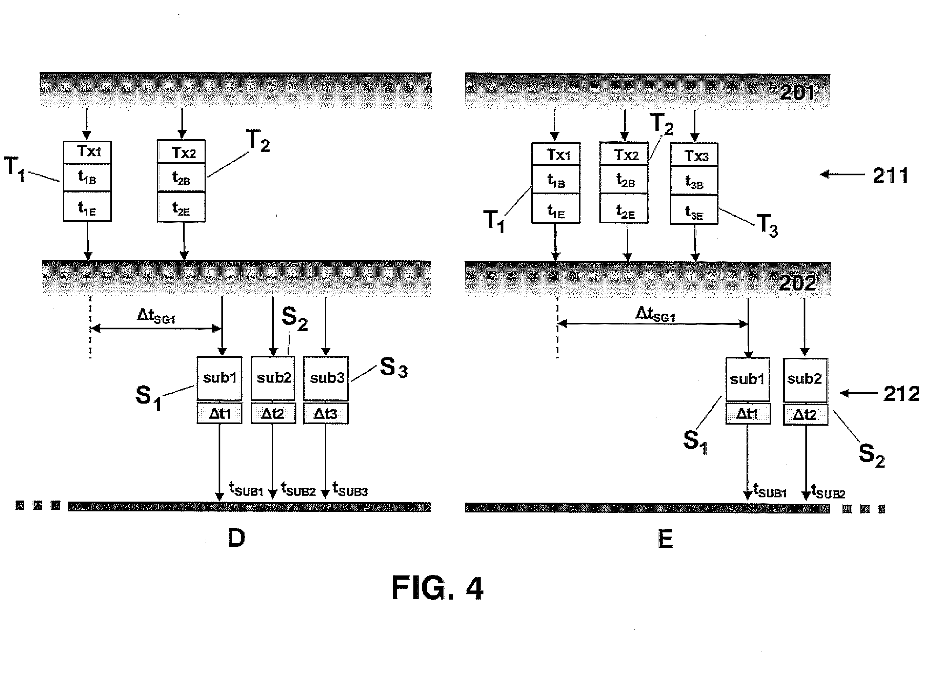

The subtitle generation sub-system 202 can be completely automatic, semiautomatic or completely manual. This means that this sub-system can automatically create the text of the subtitle and all the information included in subtitle units 212 without human intervention in editing or formatting (using NLP, for example). In other possible implementations, the subtitle generation sub-system 202 automatically creates the subtitle units 212 whereas a person monitors them and eventually makes changes, edits, formats, etc., or the person can be the only one responsible for creating the set of subtitle units 212 from the transcription blocks 211, dividing subtitles, defining the duration, etc. In any case, for the purpose of calculating each individual subtitle delay $\Delta ti$, it is necessary to measure the time used in this sub-system from the moment in which the first transcription block $T_1$ of a group of N transcription blocks (used for creating a set of M subtitle units) is available until the first subtitle unit $S_1$ of the M subtitle units (created from these N transcription blocks) is supplied to the packetizing and transmitting/broadcasting phases. This time is shown in Figures 3 and 4, indicated as $\Delta t_{SGi}$, which indicates the subtitle generation delay of the subtitle unit $S_i$. The total time used in creating the subtitle unit $S_i$, within a set of subtitle units, from the corresponding audio fragment/fragments j thereof is $\Delta ti$, calculated as the difference between the delivery time $tsub_1$ of the first subtitle unit $S_1$ and the time in which the first corresponding audio fragment j was produced $t_{1B}$: $\Delta ti = tsub_1 - t_{1B}$. This subtitle delay $\Delta ti$ can be used in combination with the presentation time stamp MPEG to allow audio and subtitle synchronization.

Figure 3 shows time stamping examples in the audio transcription sub-system 201 and in the subtitle generation sub-system 202 for the following cases of the ratio between the number N of transcription blocks 211 and the number M of subtitle units 212:

(A) 1-1 ratio, there is one subtitle unit $S_1$ corresponding to a single transcription block $T_1$;

(B) N-1 ratio, in the example of Figure 3 (B) N=2;

(C) 1-M ratio, in the example of Figure 3 (C) M=2.

Figure 4 shows time stamping examples in the audio transcription sub-system 201 and in the subtitle generation sub-system 202 for the following cases of the ratio between the number N of transcription blocks 211 and the number M of subtitle units 212:

(D) N-M ratio, N < M, in the example of Figure 4 (D) N=2, M=3;

(E) N-M ratio, N > M, in the example of Figure 4 (E) N=3, M=2.

In all cases, the delay for each individual subtitle unit generated from a set of transcription blocks is the same. Its value $\Delta t_1$ is calculated as the difference between the time in which the first subtitle unit is created in 202 and the time in which the audio fragment corresponding to the first transcription block began. The formula for the first subtitle is: $\Delta t_1 = tsub_1 - t_{1B}$. In this case, as in the case of Figures 3C, 4D and 4E in which more than one subtitle is generated, the delay for the second and successive subtitles is also the same: $\Delta t_2 = \Delta t_1 = tsub_1 - t_{1B}$ and $\Delta t_2 = \Delta t_3$ in the example of Figure 4E. Subtitle durations can be calculated according to subtitling standards or according to other criteria. In any case, durations are not affected by the method of synchronization described herein and vice versa.

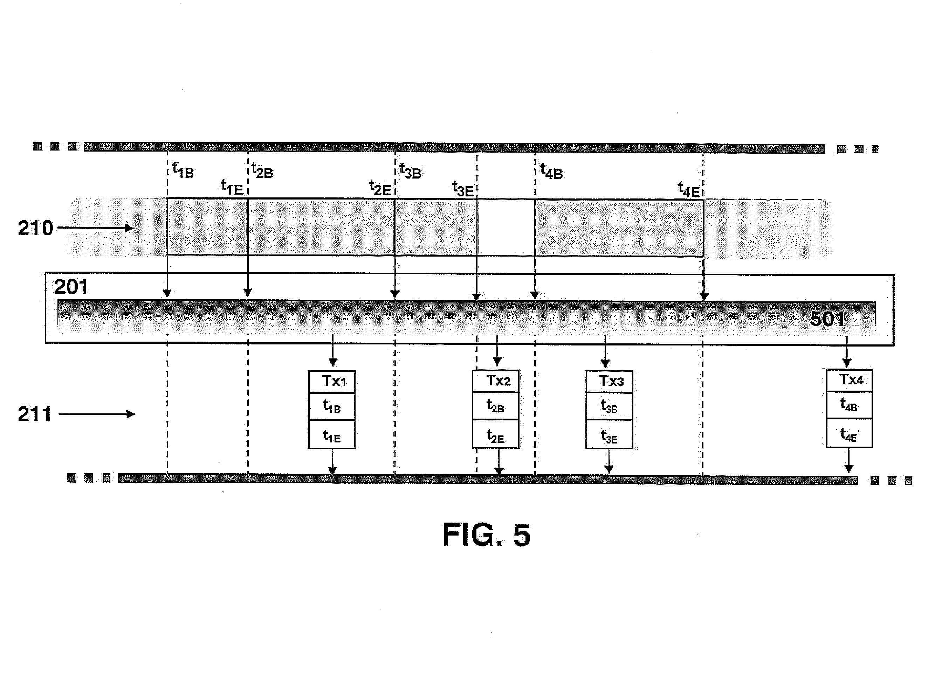

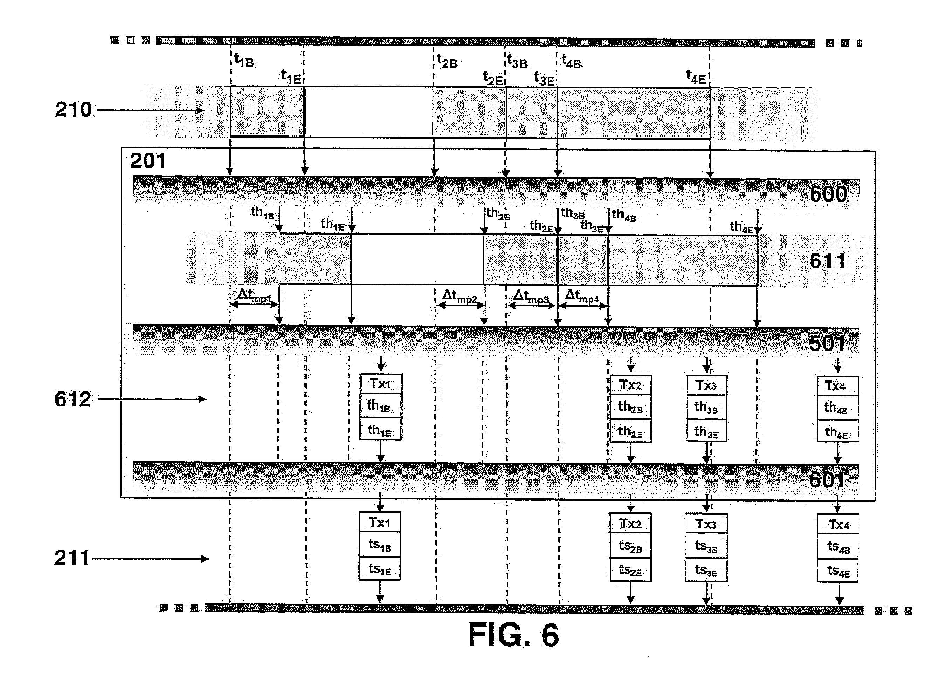

The estimation of the beginning and end time stamps $t_{jB}$ and $t_{jE}$ of each transcription block $T_j$ is critical for the subsequent calculation of the subtitle time delay $\Delta ti$ of a subtitle unit $S_i$ with respect to the corresponding audio fragment/fragments j. Figure 5 and Figure 6 show these time stamps $t_{jB}$ and $t_{jE}$ for each transcription block $T_j$ created by the audio transcription sub-system 201.

In a completely automatic audio transcription sub-system 201 in which the transcription process is based on ASR without respeaking, the ASR software performing the entire transcription process (without human intervention) can provide information about the exact time corresponding to the audio transcription (in addition to the transcription itself); it is therefore unnecessary to estimate the time used in this part of the process because exact values of $t_{jB}$ and $t_{jE}$ as shown in Figure 5 are available. In this case, the time stamps $t_{jB}$ and $t_{jE}$ are not delay measurements but rather time references $t_j$ that indicate when the transcribed audio fragment j was produced with respect to the reference clock 100, therefore: $t_{jB} = t_j$ and $t_{jE} = t_j + d_j$, where $d_j$ is the duration of the audio fragment j.

When the transcription process is manual or semiautomatic as in an audio transcription sub-system 201, based on a person pressing keys in a stenography machine, in a conventional computer type keyboard or in a syllabic keyboard, or based on respeaking using ASR software (used in RTVE in Spain, for example), there is a listening and mental processing phase 600 performed by a person followed by a transcription process (which can even involve an idiomatic translation) also performed by a person although using special devices or software (ASR in respeaking, stenography in shorthand writing, etc.), thus completing the generation of the transcription blocks 211, which are the output of the audio transcription sub-system 201. The transcription block $T_j$ contains the text of the transcribed audio fragments and the time stamps, which represent the beginning and end times $t_{jB}$ and of the transcription block $T_j$, respectively, which are estimated according to lo following:

The fact that there are variable delays from listening to transcription which depend on the person (mental processing delay) and the particular audio fragment, and that they are difficult to measure precisely, requires using an algorithm providing an estimation of delays in most scenarios. In other scenarios, an additional input provided by the operator can be used for tracking the start of each audio fragment by means of an auxiliary tool (pedal, voice instruction ...) to digitally record and number the fragment. On the other hand, the transcription process (ASR, stenography or others) also in turn introduces a delay, although it can be obtained from the exact time stamps $th_{iB}$ and $th_{iE}$ given by the audio transcription sub-system 201, shown in Figure 6, as is explained later.

In the scenario depicted in Figure 6, the result of the step of "listening and mental processing" 600 with respect to the original audio 610 is human transcription (for example, respeaking audio, stenography typing, etc.) 611 which is introduced in the "transcription process" 501 (for example ASR for respeaking, shorthand writing software for stenography typing, etc.) for the purpose of generating a set of transcription blocks although still without taking the mental processing delay $\Delta t_{mpj}$ into account. The transcription process 501 of the human transcription provides a transcribed text and two time stamps $th_{iB}$ and $th_{iE}$. The following step 601 is the estimation of the mental processing delay $\Delta t_{mpj}$ which will be added to the two exact time stamps $th_{iB}$ and $th_{iE}$ associated with the blocks 612 transcribed for the purpose of obtaining an estimation of the beginning and end time stamps $t_{jB}$ and $t_{jE}$ of the transcription blocks 211. The estimation of $t_{jB}$ and $t_{jE}$ is referred to as $ts_{jB}$ and $ts_{jE}$, respectively. Hence:

$$ts_{jB} = th_{jB} + \Delta t_{mpj}$$

$$ts_{jE} = th_{jE} + \Delta t_{mpj}$$

It must be pointed out that in the case illustrated by Figure 6, the time stamps of the transcription blocks 211 are not delays but rather time references for the beginning and end of the transcribed audio fragments with respect to the real time reference clock 100. Since the exact values of $th_{iB}$ and $th_{iE}$ can be obtained by means of the corresponding software or device used by the respeaker (or shorthand writer, etc.), the critical part is calculating the mental processing delay $\Delta t_{mpj}$ introduced by the respeaker (or shorthand writer, etc.). Even if the mental processing delay $\Delta t_{mpj}$ was not considered, performing only one tracking of $th_{iB}$ and $th_{iE}$ would result in an important improvement in subtitle synchronization. However, for better synchronization it is necessary to design an algorithm for estimating the time used in the step of "listening and mental processing" 600. The better said estimation is, the better the approximation of the beginning and end times $t_{jB}$ and $t_{jE}$ to the real time references, i.e., $ts_{jB} \approx t_{jB}$ and $ts_{jE} \approx t_{jE}$, will be.

The algorithm for estimating the mental processing delay $\Delta t_{mpj}$ depends on the type of mental transcription that is carried out. Two main scenarios are produced in the step of "listening and mental processing" 600: (a) a literal or quasi-literal transcription in which there is continuous transcription, as occurs in stenography; (b) a transcription with longer listening periods although less literal transcription (discrete transcription, as occurs in a respeaking subtitling system). For continuous mental transcriptions, the mental processing delay $\Delta t_{mpj}$ is short and virtually constant; it can therefore be considered a configurable parameter, assigned to the person according to his/her abilities. In discrete transcriptions, the mental processing delay $\Delta t_{mpj}$ is longer and varies greatly depending on the degree of interpretation/summary. However, in any scenario, the mental processing delay $\Delta t_{mpj}$ can be estimated using a general algorithm: $\Delta t_{mpj}$ is directly proportional to the length of the transcribed text and inversely proportional to the degree of literality of the transcription. This mental processing delay estimation algorithm can mathematically be expressed as:

$$\Delta t_{mpj} = \text{TextLength} \cdot (K/\mu) + C$$

where said delay $\Delta t_{mpj}$ is estimated in seconds; TextLength is the transcription length of the audio fragment j (in units of length, u.l.); K is the duration of a unit of length (in seconds/u.l.); C is a time constant (in seconds); $\mu$ is a degree of literality variable ($0 \leq \mu \leq 1$) which represents the degree of similarity to literality of the transcription (for example, 1 means 100% literality; 0.5 means 50%, such that for 2 words or letters pronounced in the audio, the person transcribing them summarizes them in 1; 0.25 means that for 4 words/letters, the person transcribes only 1, and so on and so forth).

The parameter $\mu$ must be adjusted to reflect the abilities of the person doing the transcribing and also depends on the type of live television program or scenario, etc. For example, the transcription length TextLength can be measured in words or in characters, and K in seconds/word or seconds/character. The multiplication of TextLength and K results in the estimated duration of the audio fragment. The constant C represents the time used in listening and processing, which is not related to the duration of the audio and is used as a fixed time which also depends on human abilities.

For a continuous mental transcription scenario, the following suppositions can be considered:

K·TextLength, is a constant time fixed as a parameter (for example, 2 seconds)
$\mu$ is equal to 1 (literal transcription)
C is a time constant (for example, 1 second).

Therefore, the mental processing delay $\Delta t_{mpj}$ is a constant (in this example, 3 seconds).

For a discrete mental transcription scenario, the values are different, for example:

K can be approximately 0.33 to 0.5 seconds/word or 0.8 seconds/character.
TextLength$_j$ is a variable depending on the transcription block.
$\mu$ can be 0.5 on average.
C can be 1 second.

An MPEG transport stream contains elementary streams for audio, video and subtitles. The elementary audio, video and data streams (PES) are coded in packetized elementary stream packets (PES packets) which are the transmission units in a transport stream. When an audio signal is converted into a PES, each aforementioned audio fragment j is coded according to standard ISO 13818-3 and is packetized into at least one PES packet of the corresponding elementary audio stream, together with the synchronization information known as the presentation time stamp (PTS). Each audio PES packet contains a PTS which refers to the presentation time of the audio packet when it is reproduced in an end user receiver. An audio fragment j can be transported in several audio PES packets. Similarly, when the video signal is present, it is transported in PES packets within an elementary video stream which also includes PTS synchronization information. It is important to point out that PTS refers to the time in which packetizing occurs.

The subtitles are also coded as packets within an elementary subtitle stream where each subtitle unit i is coded. Different methods of coding are provided for subtitles in an MPEG/DVB transport stream, for example DVB-Sub and Teletext subtitling. As a result of the method of coding, a subtitle unit i can be divided into one or more PES packets of the elementary subtitle stream, each one containing, in addition to the subtitle unit data (text, color, on screen position,...), a PTS as in the cases of audio or video.

The method of coding used for DVB-Sub subtitles defined in ETSI EN 300 743 establishes that a subtitle unit is coded in a "display set" and that a display set is made up of a set of "subtitle segments". All the subtitle segments of a display set are packetized and transported in PES packets sharing the same PTS. This means that one subtitle unit is transported in one or more PES packets of the subtitle stream.

The described embodiments of the invention use an extension of the DVB/MPEG standard in generating the MPEG stream on the emitting side to include the variable delay information calculated for each subtitle, as explained above, in the corresponding DVB elementary streams of a television channel: DVB-Sub for subtitling and DVB-TXT for Teletext. This extension also supports the necessary control information.

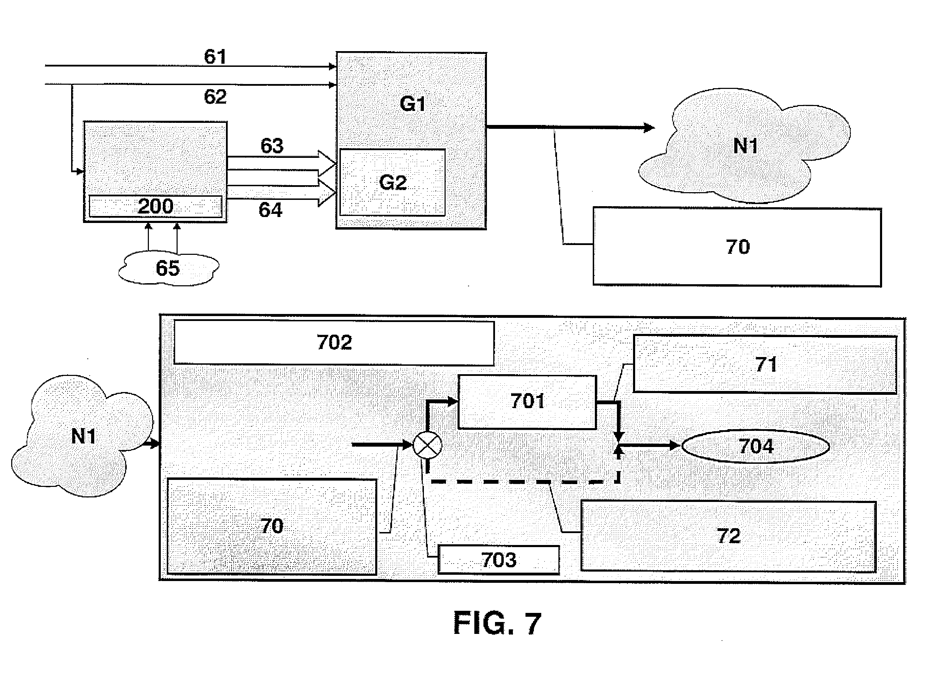

In the different embodiments of the invention illustrated in Figures 7-9, an MPEG/DVB generator G1 which supports the required extensions that it accepts as inputs is used:

a) one or more video signals 61, if video is required (for example, in a television channel application scenario),
b) one or more audio signals 62 (for example, from a television channel or radio station), and
c) a subtitling data sequence including, for each subtitle that will be displayed on the screen, the individual delay information 64 of that subtitle (obtained or estimated according to the objective of the invention) with respect to the corresponding audio/video, together with typical subtitle information such as its text 63, its presentation time, parameters 65 such as duration or end time, on screen position, color, etc.

According to different subtitling synchronization implementations shown in Figures 7-9, the proposed MPEG/DVB generator G1 comprises extended MPEG/DVB generating means G2 for considering the individual delays of each subtitle, which can form, from the aforementioned inputs, a complete television channel in MPEG/DVB format the distinctive characteristic of which is that it includes the values of the delay associated with each subtitle. To point out that this format includes the necessary extensions, it is hereinafter referred to as MPEG/DVB++.

The MPEG, DVB-Sub and DVB-TXT standards provide a framework which can easily be extended to support transmitting these extensions. Details of the format and method for creating the MPEG/DVB++ stream are provided below. The MPEG/DVB++ output stream is made up of one or more television channels, each consisting of:
- Elementary streams for video (usually a single stream although there can be more video streams)
- Elementary streams for audio (one or more elementary audio streams)
- Elementary stream/streams for DVB-Sub with additional information as detailed below:
According to standard ETSI EN 300 743 (Digital Video Broadcasting Subtitling Systems), the basic syntactical element of subtitling streams is the subtitling_segment. For the purposes of the invention, a new DVB subtitling segment which is included right before the segment called end_of_display_set_segment in the DVB-Sub standard and which is herein referred to as subtitle_delay_segment, which is assigned one of the segment_type values which has still not been assigned in standard ETSI EN 300 743 v1.3.1 (the provided values are in the interval of 0x81 - 0xEF reserved for private data; other values are possible using the interval reserved for a future use in the mentioned standard) is defined. The subtitle_delay_segment is an additional segment containing the time of delay associated with a created display_set (according to the standard). A display_set is the set of subtitle segments of a specific subtitling service which is associated with the same presentation time stamp (PTS, as it is defined in standard ISO/IEC 13818-1) value. Each display_set contains a subtitle_delay_segment made up of two fields as shown in Table 1:

Table 1

| Syntax | Size | Type |
| --- | --- | --- |
| subtitle_delay_segment () { | | |
|     variable_subtitle_delay_time | 16 bits | uimsbf |
|     recommended_event_shift_time | 8 bits | uimsbf |
| } | | |
| variable_subtitle_delay_time: is the individual delay applicable to the display_set measured in units of 100 milliseconds.<br>recommended_event_shift_time: is the minimum time in seconds that the event must be delayed to enable compensating for individual subtitle delays; it is used during the subsequent process of synchronizing subtitles; it is configurable and normally remains constant during a given television event or even for a given television channel. | | |

- Elementary stream/streams for Teletext subtitles with embedded variable delay information inserted for each subtitle, which can be included, similarly to the case of DVB-Sub, in the MPEG/DVB++ output stream.
- A program map table (Program_Map_Table or PMT, as it is defined in standard ISO/IEC 13818-1) for the television channel containing an additional descriptor, which is referred to as synchronizable_subtitling_descriptor, for the input corresponding to the DVB-Sub elementary stream. This descriptor is defined as shown below in Table 2:

Table 2

| Syntax | Size | Type |
|---|---|---|
| synchronizable_subtitling_descriptor () { | | |
| descriptor_tag | 8 bits | uimsbf |
| descriptor_length | 8 bits | uimsbf |
| synchronizable_subtitle_stream_type | 8 bits | uimsbf |
| recommended_event_shift_time | 8 bits | uimsbf |
| } | | |

descriptor_tag adopts one of the values in the interval of 0x80 to 0xFE specified as defined by the user in standard ETSI EN 300 468; other values are possible using the extension descriptor mechanism defined in the standard.

descriptor_length is another field of the preceding standard that specifies the number of bytes included in the immediately following data fields.

synchronizable_subtitle_stream_type: is the new field defined to indicate the type of synchronizable subtitle stream; it specifies additional information about how to use and access the variable individual subtitle delays transported in the subtitle stream.

recommended_event_shift_time: is the new field defined to indicate the minimum time in seconds that the event must be delayed for the purpose of adapting to the individual subtitle delays; this time it is applied during the process of synchronizing subtitles.

The synchronizable_subtitling_descriptor shown in Table 2 can usually follow the existing subtitling_descriptor in the PMT. Furthermore, the remaining Program Specific Information (PSI) tables, such as the Program Association Table (PAT), the Time and Date Table (TDT), the Time-Offset Table (TOT), etc., as well as Service Information (SI) tables such as the Service Descriptor Table (SDT), and the Event Information Table (EIT), etc., can be included in the MPEG/DVB++ output stream in the usual form.

The MPEG/DVB++ generator G1 output stream with the variable delay information included in DVB-Sub streams and in elementary Teletext streams, is ready to be used as input in a subtitle synchronization module (701, 801, 901).

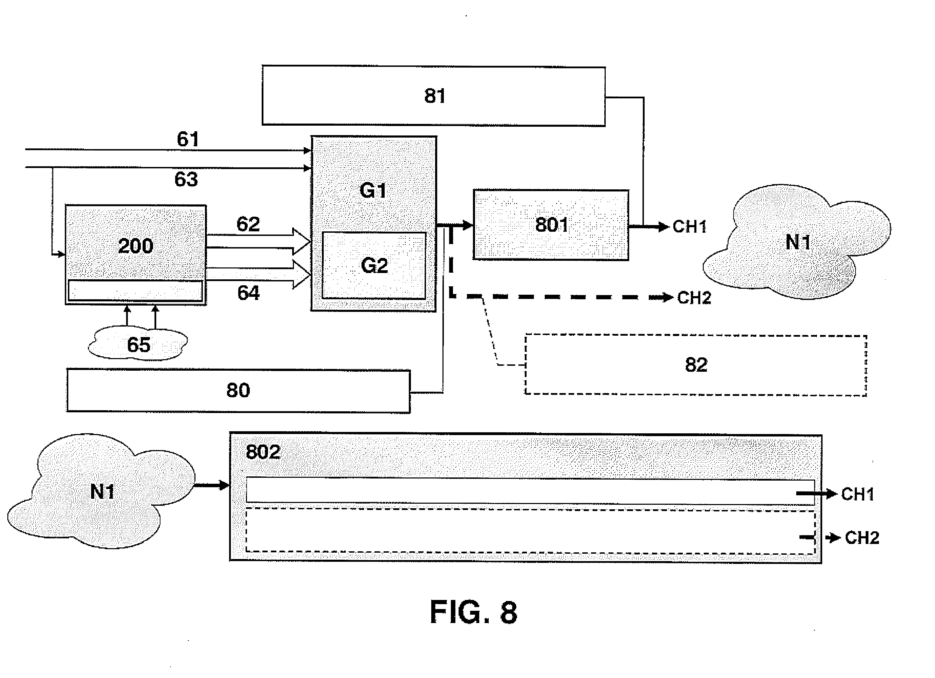

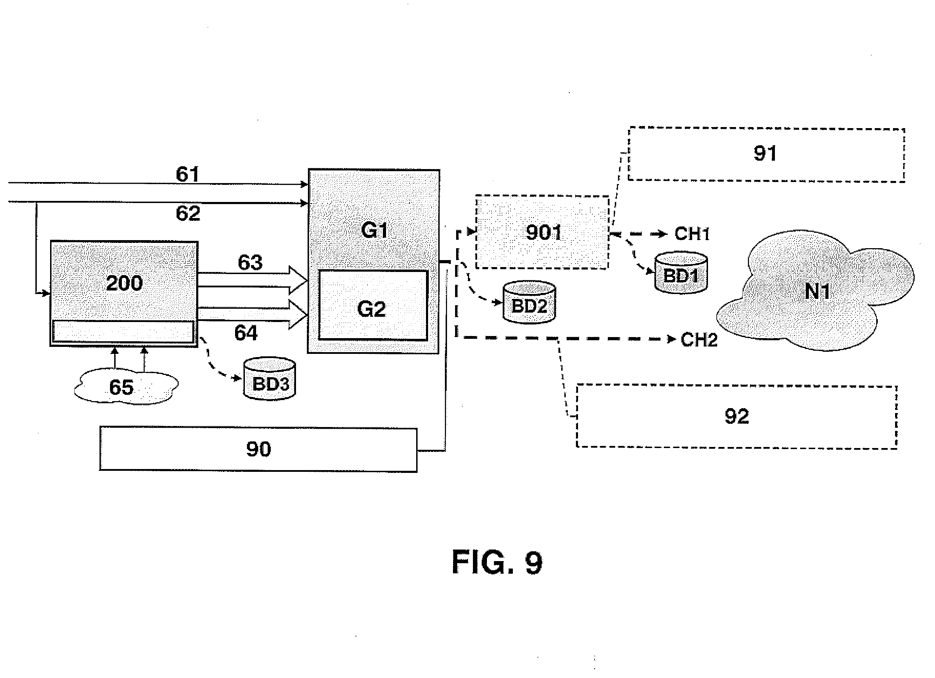

There are different implementation and use alternatives with various implications: Figure 7 shows the subtitle synchronization module 701 implemented on the receiving side, whereas Figures 8 and 9 show the subtitle synchronization module (801, 901) implemented on the transmitting side. Choosing the most suitable alternative must take into account the requirements concerning the bandwidth assignment, regulatory limitations and use restrictions. In any case, the subtitle synchronization module (701, 801, 901) provides an MPEG/DVB stream in which the audiovisual event has been delayed an amount of time equal to the recommended_event_shift_time and in which the elementary audio, video and subtitle streams are synchronized (a stream of this type is referred to as MPEG/DVBsync).

Since the packetized elementary streams (PES), specified in standard ISO/IEC 13818-1, corresponding to elementary video, audio and subtitle streams, are subjected to a process of queuing/delay combined with PTS manipulation to align the subtitle packets with their target time in the original video and audio signals (61, 62), the process of synchronization performed by the proposed subtitle synchronization module (701, 801, 901) can be described as a process of queuing and recalculation which implements the following:

```
Si (packet_video) {wait (REST) seconds; PTSi = PTSi + REST}
Si (packet_audio) {wait (REST) seconds; PTSi = PTSi + REST}
Si (packet_subtitle) { if (REST - Δti) ≥ 0
                            {wait (REST- Δti) seconds;
                            PTSi = (PTSi - Δti) + REST}
                       if not
                            {wait (0) seconds;
                            PTSi = PTSi}
                       }
```

where

$\Delta t_i$ is equal to the variable_subtitle_delay_time, which is the variable individual delay for the subtitle i.

REST is a shift time equal to or greater than the recommended_event_shirt_time which, in this implementation example, is the value of the minimum delay required to compensate for the most unfavorable subtitling delay considered. The delay applied for individually synchronizing the subtitle packet i with the audio (and video and/or any other information synchronizable with the audio such as a video with sign language, for example) is REST-$\Delta t_i$ and, therefore, PTSi = PTSi-$\Delta t_i$+REST. If subtitles are received with a $\Delta ti$ greater than REST, its delay with respect to the audio and video is only partially compensated for (REST seconds).

PTSi is the presentation time stamp of each PES packet in MPEG-2/DVB; the presentation time stamp PTSi of each video, audio and subtitle packet i is taken to the present by increasing it in REST for the purpose of assuring that each PTSi represents the current real time clock pulses.

All these values (time stamps PTSi, variable delays $\Delta ti$, and the value for REST) required by the subtitle synchronization module (701, 801, 901) are received from the extended MPEG-2/DVB generator G1 as data values in the MPEG-2/DVB++ output stream.

A buffer memory which can contain REST seconds of packets (a 20 second REST, for example, requires a buffer memory size of approximately 12.5 Mbytes for a transport stream channel with audio, video and subtitles) is necessary to generate a synchronized service.

All the parameters of the proposed MPEG-2/DVB++ stream output format are included such that full compatibility with current MPEG/DVB standards and the TDT receivers is assured, which is essential for the use alternatives described below.

A possible embodiment of the invention relates to subtitle synchronization that can be selected by the user on the receiving side, as shown in Figure 7. From the original video and audio signals (61, 62), the improved live subtitle system 200 supplies the individual subtitle delay 64 together with the subtitle 63 and the extended MPEG/DVB generator G1 generates an MPEG/DVB++ stream 70 including said variable delays and signaling data related to the subtitles for a television channel broadcast or transmission. The MPEG/DVB++ streams 70 pass through a network N1, (for example, a TDT broadcasting network or an IPTV transmission network) to a receiver 702 (for example, TDT or IPTV) supporting subtitle synchronization as a user option (the user can select if he/she prefers to see the version with subtitles synchronized with video) by means of a subtitle synchronization module 701 as explained above.

The subtitle synchronization module 701 obtains the aforementioned MPEG/DVBsync 72 in which the elementary audio and video streams of the television channel are synchronized with the subtitles from the MPEG/DVB++ streams 70 received, then providing a slightly delayed reproduction (quasi-live) of the audiovisual event.

From the transmitted MPEG/DVB++ stream 70, one of the two possible output streams (71, 72) in the TDT/IPTV receiver is sent to the television reproduction module 704, according to the user selection 703:

i) the MPEG/DVB++ output stream 71 is a real live option that is fully compatible with conventional receivers, consisting of audio/video and subtitles which are not synchronized by means of the synchronization module 701;

ii) the MPEG/DVBsync stream 72 is a quasi-live version optionally generated on the receiving side if the synchronization module 701 is selected.

The following actions take place on the receiving side:

a) The receiver 702 (IPTV decoding module, TDT decoder,...) recognizes in the incoming MPEG/DVB++ stream 70 the existence of additional information allowing the user to see a television channel with subtitles activated and synchronized with the audio and video streams;

b) The receiver 702 shows the user the availability of this subtitle synchronization service;

c) After being activated by the user, the receiver 702 starts to operate to provide a synchronized and delayed reproduction for the selected television channel or television program. Depending on the receiver, there are different alternatives for the implementation of the control and user menus in the receiver.

Therefore, for the purpose of providing the user both options i) and ii) at reception, the new TDT or IPTV decoding modules would have to implement the described synchronization algorithm, manage the new set of descriptors and act accordingly. The performance of older decoding modules is not affected because they ignore the new fields, descriptors, or stream types.

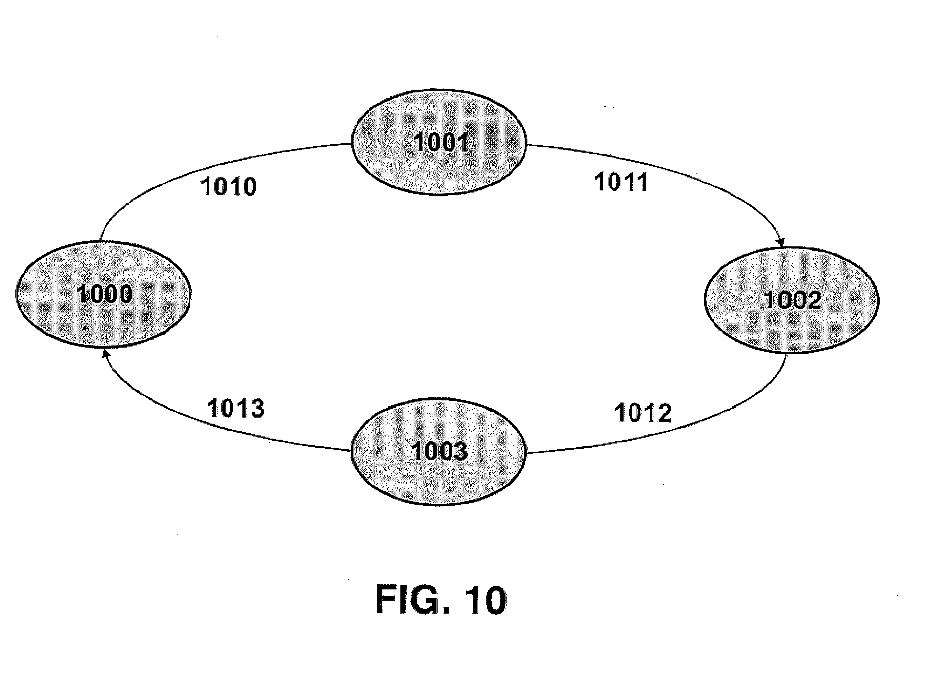

The performance of the receiver 702 for implementing subtitle synchronization is depicted by means of the states shown in Figure 10, where is depicted the transition from the normal state 1000 to the synchronized and delayed state 1002, passing through an intermediate transition state 1001 between both. In other words, when the user selects seeing a television program in a synchronized and delayed mode, he/she is requesting exactly the following from the receiver 702: "stop reproducing the video and audio in my television set until you can show them synchronized with their subtitles".

After the user enables subtitle synchronization and if the receiver input consists of an MPEG/DVB++ with REST ≠ 0 (transition 1010 between states 1000 and 1001), the receiver 702 enters the transition state 1001 in which the television decoding module stops reproducing the television program (i.e., the image is frozen on the screen and the audio is stopped) although it continues to receive and store MPEG packets from the transport stream in the buffer memory during the necessary wait time, the wait time being ≥ REST, to assure that the receiving buffer memories contain all the packets for audio, video and subtitles (which arrive several seconds later) necessary for a synchronized presentation of subtitles. After the wait time has elapsed, the system enters the synchronized and delayed state 1002.

During the transition 1011 from state 1001 to 1002, all the subtitle packets, for which recalculation of the presentation time stamp (PTS) results in a PTS in the past, are shown on a screen with the image frozen (and without sound) because these packets contained subtitles belonging to audio samples that have already been reproduced when the user switches from the normal state 1000 to the synchronized and delayed state 1002. Furthermore, returning to normal mode (real live mode with non-synchronized subtitles) results in a loss of several seconds (the given wait time) of the program which is being broadcast. This is depicted in Figure 10 by means of the transition state 1003 from synchronized and delayed state to normal state between transitions 1012 and 1013.

Both transition states 1001 and 1003 can be implemented in a single step (for example, waiting the entire wait time all at once) or in incremental steps (for example, waiting several seconds each time) until the required delay (ideally, REST) is stored in the buffer memory. Such implementations provide a continuous transition (for example, multiple although shorter image freeze periods) although they take longer to reach a completely synchronized final state 1002 or to return to the normal state 1000.

The wait time can be configured with a value similar to REST which is received as a parameter for the most unfavorable time elapsed in preparing subtitles. Typical conservative values are of approximately 15 seconds for ASR respeaking subtitle generation delays and of approximately 5 seconds for shorthand writing. When the wait time has elapsed, the buffer memories for the video, audio and subtitle streams involved contain enough packets to start a synchronized reproduction taking into account the individual subtitle delays.

Provided that the synchronized and delayed reproduction mode 1002 is available and selected, the entire television program is reproduced with a small delay, and the receiver 702 recalculates the PTS of each subtitle for presenting it on the screen at the same time as the original audio fragment. The synchronized and delayed reproduction mode 92 ends either automatically when the input to the television player no longer contains synchronization data (for example REST=0, or when the input is no longer MPEG-2/DVB++), or manually when the subtitles are deactivated or after the user explicitly selects disabling this option. Different implementations are possible according to preferences defined by the user. The television player either ends the presentation of all the subtitles stored in the buffer memory synchronized with audio/video before the receiver 702 switches to the normal state 1000, or it passes to the normal state immediately when the user requests returning to the normal reproduction mode. Both are implementation/configuration options in the receiver.

This implementation of the subtitle synchronization option in the receiver is suitable, for example, for the terrestrial or satellite television broadcasting because it does not require additional bandwidth, although it limits the offer of reproducing with synchronized subtitles to users who have new decoding modules with the improved receiver 702 as shown in Figure 7. The receivers which do not implement the option are completely compatible with this embodiment of the invention although they can only present the event as currently, i.e., live in a non-synchronized manner.

Another possible embodiment of the invention relates to synchronizing subtitles with the corresponding audio and video on the emitting side, before the television transmission/broadcasting takes place, as shown in Figure 8. A quasi-live television channel CH1 with synchronized subtitles 81 is generated, such that the audiovisual events can be transmitted or broadcast several seconds later to the receiver 802. The broadcasting/transmission of the quasi-live television channel CH1 with synchronized subtitles does not require additional bandwidth and can be suitable for broadcasting events for which a real live broadcast does not imply an instantaneity gain (for example reading a report written 2 hours ago). However, this can be illegal for the TDT broadcasting of some events (at least in some countries). An additional channel CH2 for also offering real live original non-synchronized versions 82 is also a possibility as shown in Figure 8. The two basic alternatives shown in Figure 8 have in common the MPEG/DVB++ format 80 provided by the extended MPEG/DVB generator G1, from which the subtitle synchronization module 801 implemented before the transmission/broadcasting network N1 generates the synchronized version of subtitles, referred to as MPEG/DVBsync 81. The main advantage of subtitle synchronization before broadcasting is its full compatibility with existing TDT receivers or IPTV decoding modules. The simultaneous use of two channels, CH1 for quasi-live broadcasting/transmission and CH2 for real live reproduction of the same event, is suitable when the additional bandwidth required for the additional television channel (a real alternative for IPTV or cable/fiber optic television) is available. In this case, since it is only logical to select channel CH1 when synchronized subtitles are desired, the open use of subtitles is also a practical implementation alternative.

An additional possible embodiment of the invention relates to the use of the subtitle synchronization in rebroadcasting events or programs that were subtitled live. That is possible in any of the two options described above for the emitting side, and shown with dotted lines in Figure 9. Therefore, from the generation of the MPEG/DVB++ format 90 by means of the extended MPEG/DVB generator G1, an audiovisual television event can be stored in parallel to these two options: either storing synchronized subtitles (in a multimedia storage medium BD1 using the output of the subtitle synchronization module 901) provided from MPEG/DVBsync 91 for the quasi-live television channel CH1 or non-synchronized versions 92 of live subtitled audiovisual events (in another multimedia storage medium BD2) of the real live television channel CH2. Broadcasting or distribution by any means (DVD, downloading files, web television, etc.) of a previously stored audiovisual television event with synchronized subtitles can be carried out either directly if the MPEG/DVBsync 91 is stored, or it may require a step of prior synchronization performed by the subtitle synchronization module 901 implemented on the emitting side before the transmission/broadcast.

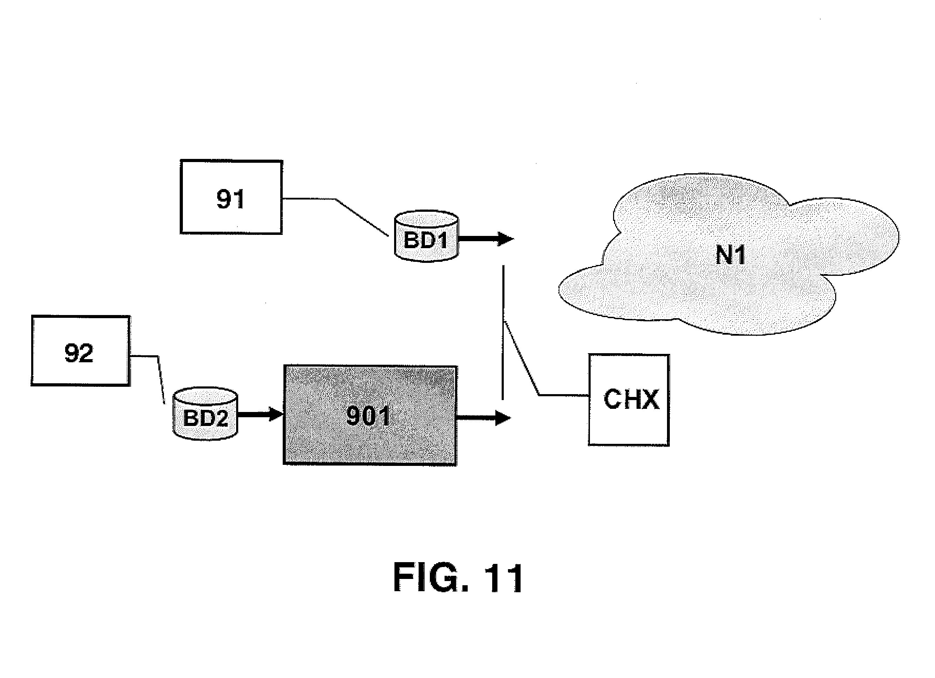

One of the advantages of this embodiment is that even if the decision is made to broadcast a live subtitled event without applying any process of synchronization to its subtitles, the synchronization can subsequently be applied in a simple manner and without additional costs, as shown in Figure 11, for rebroadcasting (or DVD distribution, web television transmission,...) with synchronized audio/video and subtitles.

For the differed rebroadcasting or distribution of live subtitled audiovisual events a synchronized MPEG/DVBsync version 91 stored in a multimedia storage medium BD1, or a non-synchronized MPEG/DVB++ version 92 containing the information necessary for being synchronized before rebroadcasting by means of applying the synchronization module 901, can be used.

A live subtitling system implementing the method of synchronization described above can provide all the information related to subtitles (duration, color, position, ...) together with their individual delays, to an MPEG/DVB generation module. As shown in Figure 9, storing this information in this point in a multimedia storage medium BD3 could also be used to facilitate editing subtitles before their possible rebroadcasting without losing synchronization capabilities.

All the preceding options described for television channels can be applied directly to subtitled digital radio channel implementations. The subtitle can be offered in television sets or other devices.

The subtitle synchronization implementation options shown herein highlight the value of using the proposed process and format (i.e., MPEG/DVB with individual subtitle delays) to provide a common source which supports real live, quasi-live broadcasting and rebroadcasting alternatives.

The functionalities provided by the described embodiments of the invention can be applied different entities or organisms to provide new features in the following manner:

-    By television operators for broadcasting audiovisual events or channels in which the live subtitling can optionally be synchronized in the receiver.
-    By television operators for broadcasting audiovisual events or channels in which the live subtitling is synchronized to offer a quasi-live reproduction of the event.
-    By television operators for storing live subtitled television programs which will be used in future previously recorded synchronized IPTV transmissions, TDT rebroadcasts or other distribution means.
-    By digital radio broadcasters for offering synchronized subtitles
-    External or integrated TDT receiver and IPTV receiver manufacturers for including subtitle synchronization as an option that can be selected by the user in future receivers.
-    Companies, institutions and TDT receiver capacity developers for including subtitle synchronization in any of their products.
-    Generally, organizations, institutions and companies that want to offer a service which supports the live subtitling of events which can be reproduced with synchronized audio, video and subtitles.

It must be observed in this text that the term "comprises" and its derivations (such as "comprising", etc.) must not be understood in an excluding sense, i.e., these terms must not be interpreted as excluding the possibility that what has been described and defined can include additional elements, steps, etc.


## Claims

1.    Method for synchronizing subtitles with audio in live subtitling systems, which comprises:

   - generating at least one subtitle i from at least one transcription block Tj corresponding to an audio fragment j; further comprising
   - determining an individual subtitle delay $\Delta t_i$ of each subtitle i;
   - creating a subtitle unit Si comprising the subtitle i and the individual subtitle delay $\Delta t_i$;
   - putting each subtitle unit Si together with a configurable associated shift delay REST in at least one subtitle PES packet, which has a presentation time stamp $PTS_i$, said subtitle PES packets being part of an extended transport stream including at least one audio packet containing the audio fragment j and a presentation time

stamp $PTS_j$;

- synchronizing subtitle PES packets with audio packets by creating a synchronized transport stream comprising all the packets of the extended transport stream delayed a time depending on the configurable associated shift delay REST,

**characterized in that**: the determination of an individual subtitle delay $\Delta t_i$ of each subtitle i comprises:

- determining a beginning time stamp $t_{jB}$ which is the moment in which the first audio fragment corresponding to the first transcription block $T_j$ of a group of transcription blocks begins, the group formed by at least one transcription block and created by an audio transcription sub-system (201), and from which at least one subtitle unit Si is generated by means of a subtitle generation sub-system (202), with respect to a reference clock (100), the reference clock 100 being used by both the subtitle generation sub-system (202) and by the audio transcription sub-system (201);
- determining a delivery time $tsub_i$ which is when the first subtitle generated from said group of transcription blocks by the subtitle generation sub-system (202) is delivered;
- subtracting the beginning time stamp $t_{jB}$ of said first audio fragment from the delivery time $tsub_i$ to calculate the individual subtitle delay $\Delta t_i = tsub_i - t_{jB}$;
- assigning said individual subtitle delay $\Delta t_i$ to each subtitle unit Si created from said group of transcription blocks;
- determining an end time stamp $t_{jE}$ which is the moment in which the first audio fragment corresponding to the first transcription block $T_j$ of the group of transcription blocks ends with respect to the reference clock (100),

where, in the audio transcription sub-system (201) firstly a listening and mental processing phase (600) and secondly a transcription process (501) are carried out, the beginning time stamp $t_{jB}$ and the end time stamp $t_{jE}$ are estimated respectively as $t_{jB} = th_{jB} - \Delta t_{mpj}$ and $t_{jE} = th_{jE} - \Delta t_{mpj}$ by calculating a mental processing delay $\Delta t_{mpj}$, $th_{jB}$ is a stamped time reference for the beginning of the transcription of the audio fragment j and $th_{jE}$ is a stamped time reference for the end of the transcription of the audio fragment j, both times given automatically by the audio transcription sub-system (201) with respect to the reference clock (100),

wherein the mental processing delay $\Delta t_{mpj}$ is calculated by the audio transcription sub-system (201) as $\Delta t_{mpj} = \text{TextLength}_j \cdot (K/\mu) + C$, TextLength j being a length in units of length of the compressed audio fragment j, K is the time duration of a unit of length; C is a time constant configurable in the audio transcription sub-system (201), and $\mu$ is a degree of literality variable, $0 \leq \mu \leq 1$, which is configurable and represents the proximity of the compression to literality.

wherein the synchronization of subtitle PES packets with audio packets comprises delaying each subtitle PES packet by associating it with a presentation time stamp in the synchronized transport stream which is equal to $PTS_i - \Delta t_i + REST$, and delaying each audio packet by associating it with a presentation time stamp in the synchronized transport stream which is equal to $PTS_j + REST$, $PTS_i$ and $PTS_j$ being the presentation time stamps in the extended transport stream and REST being the associated shift delay of the extended transport stream.

2. Method according to claim 1, wherein if the extended transport stream includes at least one video packet or at least one data packet of any class of data synchronizable with audio packets, the synchronization of subtitle packets further comprises delaying all the video and data packets a time depending on the configurable associated shift delay REST.

3. Method according to any of claims 1 to 2, wherein the synchronization of subtitle packets with audio packets is performed before transmitting the synchronized transport stream to a digital receiving device.

4. Method according to claim 3, which comprises receiving the synchronized transport stream in the digital receiving device, which is a conventional receiver selected from a digital radio broadcasting receiver, a digital terrestrial television decoding module, an IP television receiver, a digital multimedia broadcasting receiver and a digital media receiver with control means for live television.

5. Method according to any of claims 1 to 2, wherein the synchronization of subtitle packets with audio packets is performed after receiving the extended transport stream in a digital receiving device.

6. Method according to claim 5, which comprises receiving the extended transport stream in the digital receiving device, which is selected from a digital radio broadcasting receiver, a digital terrestrial television decoding module, an IP television receiver, a digital multimedia broadcasting receiver and a digital media receiver with control means for live television.

7. Method according to any of claims 1 to 2, wherein the synchronization of subtitle packets with audio packets is performed before storing the synchronized transport stream in a multimedia storage medium.

8. Method according to any of claims 1 to 2, wherein the synchronization of subtitle packets with audio packets is performed after storing the extended transport stream in a multimedia storage medium and before transmitting the synchronized transport stream to a multimedia distribution network, which is selected from an IP network, a digital terrestrial television broadcasting network and a digital radio broadcasting network.

**Patentansprüche**

1. Verfahren zur Synchronisation von Untertiteln mit Audio bei Live-Untertitlungssystemen, das umfasst:

- Erzeugen zumindest eines Untertitels i aus zumindest einem Umsetzungsblock $T_j$, der einem Audiofragment j entspricht;

ferner umfassend

- Ermitteln einer individuellen Untertitelverzögerung $\Delta t_i$ jedes Untertitels i;
- Erzeugen einer Untertiteleinheit $S_i$, die den Untertitel i und die individuelle Untertitelverzögerung $\Delta t_i$ umfasst;
- Zusammensetzen jeder Untertiteleinheit Si mit einer konfigurierbaren zugehörigen Verschiebungsverzögerung REST in zumindest einem Untertitel-PES-Paket, das einen Darstellungszeitstempel $PTS_i$ aufweist, wobei die Untertitel-PES-Pakete Teil eines erweiterten Transportstroms sind, der zumindest ein Audiopaket umfasst, das das Audiofragment j und einen Darstellungszeitstempel $PTS_j$ enthält;
- Synchronisieren von Untertitel-PES-Paketen mit Audiopaketen durch Erzeugen eines synchronisierten Transportstroms, der alle Pakete des erweiterten Transportstroms zeitverzögert in Abhängigkeit von der konfigurierbaren zugehörigen Verschiebungsverzögerung REST umfasst,

**dadurch gekennzeichnet, dass**:

d ie Ermittlung einer individuellen Untertitelverzögerung $\Delta t_i$ jedes Untertitels i umfasst:

- Ermitteln eines Startzeitstempels $t_{jB}$, der den Moment umfasst, in dem das erste Audiofragment, das dem ersten Umsetzungsblock $T_j$ einer Gruppe von Umsetzungsblöcken entspricht, beginnt, wobei die Gruppe durch zumindest einen Umsetzungsblock ausgebildet ist und durch ein Audioumsetzungs-Subsystem (201) erzeugt wird, und woraus zumindest eine Untertiteleinheit Si mittels eines Untertitelerzeugungs-Subsystems (202) erzeugt wird, und zwar in Bezug auf eine Referenzuhr (100), wobei die Referenzuhr 100 durch sowohl das Untertitelerzeugungs-Subsystem (202) als auch durch das Audioumsetzungs-Subsystem (201) verwendet wird;
- Ermitteln einer Übermittlungszeit $tsub_i$, die stattfindet, wenn der erste Untertitel, der aus der Gruppe von Umsetzungsblöcken durch das Untertitelerzeugungs-Subsystem (202) erzeugt wird, übermittelt wird;
- Subtrahieren des Startzeitstempels $t_{jB}$ des ersten Audiofragments von der Übermittlungszeit $tsub_i$, um die individuelle Untertitelverzögerung $\Delta t_i = tsub_i - t_{jB}$ zu berechnen;
- Zuordnen der individuellen Untertitelverzögerung $\Delta t_i$ zu jeder Untertiteleinheit Si, die aus der Gruppe von Umsetzungsblöcken erzeugt wird;
- Ermitteln eines Endzeitstempels $t_{jE}$, der den Moment umfasst, in dem das erste Audiofragment, das dem ersten Umsetzungsblock $T_j$ der Gruppe von Umsetzungsblöcken entspricht, endet, in Bezug auf die Referenzuhr (100),

wobei in dem Audioumsetzungs-Subsystem (201) erstens eine Phase (600) eines Hörens und einer mentalen Verarbeitung und zweitens ein Umsetzungsprozess (501) ausgeführt werden, wobei der Startzeitstempel $t_{jB}$ und der Endzeitstempel $t_{jE}$ als $t_{jB} = th_{jB} - \Delta t_{mpj}$ bzw. $t_{jE} = th_{jE} - \Delta t_{mpj}$ geschätzt werden, indem eine Verzögerung $\Delta t_{mpj}$ einer mentalen Verarbeitung berechnet wird, wobei $th_{jB}$ eine mit Stempel versehene Zeitreferenz für den Start der Umsetzung des Audiofragments j ist und $th_{jE}$ eine mit Stempel versehene Zeitreferenz für das Ende der Umsetzung des Audiofragments j ist, wobei beide Zeiten in Bezug auf die Referenzuhr (100) automatisch durch das Audioumsetzungs-Subsystem (201) bereitgestellt werden, wobei die Verzögerung $\Delta t_{mpj}$ einer mentalen Verarbeitung durch das Audioumsetzungs-Subsystem (201) als $\Delta t_{mpj}$ = $TextLength_j \cdot (K/\mu) + C$ berechnet wird, wobei $TextLength_j$ eine Länge in Längeneinheiten des komprimierten Audiofragments j ist, K die Zeitdauer einer Längeneinheit ist; C eine Zeitkonstante ist, die in dem Audioumsetzungs-Subsystem (201) konfiguriert werden kann und μ ein Grad einer Wörtlichkeitsvariable, $0 \leq \mu \leq 1$, ist, die konfigurierbar ist und die Nähe der Komprimierung zur Wörtlichkeit darstellt,

wobei die Synchronisation von Untertitel-PES-Paketen mit Audiopaketen umfasst, dass jedes Untertitel-PES-Paket verzögert wird, indem es mit einem Darstellungszeitstempel in dem synchronisierten Transportstrom in Verbindung gebracht wird, der gleich $PTS_i - \Delta t_i + REST$ ist, und jedes Audiopaket verzögert wird, indem es mit einem Darstellungszeitstempel in dem synchronisierten Transportstrom in Verbindung gebracht wird, der gleich $PTS_j + REST$ ist, wobei $PTS_i$ und $PTS_j$ die Darstellungszeitstempel in dem erweiterten Transportstrom sind und REST die zugehörige Verschiebungsverzögerung des erweiterten Transportstroms ist.

2. Verfahren nach Anspruch 1,
wobei, wenn der erweiterte Transportstrom zumindest ein Videopaket oder zumindest ein Datenpaket einer beliebigen Klasse von mit Audiopaketen synchronisierbaren Daten umfasst, die Synchronisation von Untertitelpaketen ferner umfasst, dass alle Video- und Datenpakete um eine Zeit verzögert werden, die von der konfigurierbaren zugehörigen Verschiebungsverzögerung REST abhängt.

3. Verfahren nach einem der Ansprüche 1 bis 2,
wobei die Synchronisation von Untertitelpaketen mit Audiopaketen durchgeführt wird, bevor der synchronisierte Transportstrom an eine digitale Empfangseinrichtung übertragen wird.

4. Verfahren nach Anspruch 3,
das umfasst, dass der synchronisierte Transportstrom in der digitalen Empfangseinrichtung empfangen wird, die ein herkömmlicher Empfänger ist, der aus einem digitalen Rundfunkempfänger, einem digitalen Decodiermodul für terrestrisches Fernsehen, einem IP-Fernsehempfänger, einem digitalen Multimediarundsendungsempfänger und einem digitalen Medienempfänger mit einem Steuermittel für Live-Fernsehen ausgewählt wird.

5. Verfahren nach einem der Ansprüche 1 bis 2,
wobei die Synchronisation von Untertitelpaketen mit Audiopaketen nach dem Empfang des erweiterten Transportstroms in einer digitalen Empfangseinrichtung durchgeführt wird.

6. Verfahren nach Anspruch 5,
das umfasst, dass der erweiterte Transportstrom in der digitalen Empfangseinrichtung empfangen wird, die aus einem digitalen Rundfunkempfänger, einem digitalen Decodiermodul für terrestrisches Fernsehen, einem IP-Fernsehempfänger, einem digitalen Multimediarundsendungsempfänger und einem digitalen Medienempfänger mit einem Steuermittel für Live-Fernsehen ausgewählt wird.

7. Verfahren nach einem der Ansprüche 1 bis 2,
wobei die Synchronisation von Untertitelpaketen mit Audiopaketen durchgeführt wird, bevor der synchronisierte Transportstrom in einem Multimediaspeichermedium gespeichert wird.

8. Verfahren nach einem der Ansprüche 1 bis 2,
wobei die Synchronisation von Untertitelpaketen mit Audiopaketen durchgeführt wird, nachdem der erweiterte Transportstrom in einem Multimediaspeichermedium gespeichert wurde und bevor der synchronisierte Transportstrom an ein Multimediaverteilungsnetz übertragen wird, das aus einem IP-Netz, einem digitalen Rundsendungsnetz für terrestrisches Fernsehen und einem digitalen Rundfunknetz ausgewählt wird.

**Revendications**

1. Procédé pour synchroniser des sous-titres et de l'audio dans des systèmes de sous-titrage en direct, qui comprend :

- générer au moins un sous-titre i à partir d'au moins un bloc de transcription $T_j$ correspondant à un fragment audio j ;

comprenant en outre :

- déterminer un retard de sous-titre individuel $\Delta t_i$ de chaque sous-titre i ;
- créer une unité de sous-titre Si comprenant le sous-titre i et le retard de sous-titre individuel $\Delta t_i$ ;

- présenter chaque unité de sous-titre Si conjointement avec un retard de décalage associé configurable REST dans au moins un paquet PES de sous-titre, qui a une estampille temporelle de présentation $PTS_i$, lesdits paquets PES de sous-titre faisant partie d'un flux de transport étendu comprenant au moins un paquet audio contenant le fragment audio j et une estampille temporelle de présentation $PTS_j$ ;

- synchroniser des paquets PES de sous-titre avec des paquets audio par création d'un flux de transport synchronisé comprenant tous les paquets du flux de transport étendu retardés d'un temps fonction du retard de décalage associé configurable REST,

**caractérisé par le fait que** :

l a détermination d'un retard de sous-titre individuel $\Delta t_i$ de chaque sous-titre i comprend :

- déterminer une estampille temporelle de début $t_{jB}$ qui est le moment auquel le premier fragment audio correspondant au premier bloc de transcription $T_j$ d'un groupe de blocs de transcription commence, le groupe étant formé par au moins un bloc de transcription et créé par un sous-système de transcription audio (201), et à partir duquel au moins une unité de sous-titre Si est générée au moyen d'un sous-système de génération de sous-titre (202), par rapport à une horloge de référence (100), l'horloge de référence 100 étant utilisée à la fois par le sous-système de génération de sous-titre (202) et par le sous-système de transcription audio (201) ;

- déterminer un temps de distribution tsubi qui est le moment auquel le premier sous-titre généré à partir dudit groupe de blocs de transcription par le sous-système de génération de sous-titre (202) est distribué ;

- soustraire au temps de distribution tsubi l'estampille temporelle de début $t_{jB}$ dudit premier fragment audio, pour calculer le retard de sous-titre individuel $\Delta t_i = tsub_i - tj_B$ ;

- attribuer ledit retard de sous-titre individuel $\Delta t_i$ à chaque unité de sous-titre Si créée à partir dudit groupe de blocs de transcription ;

- déterminer une estampille temporelle de fin $t_{jE}$ qui est le moment auquel le premier fragment audio correspondant au premier bloc de transcription $T_j$ du groupe de blocs de transcription se termine par rapport à l'horloge de référence (100),

dans lequel, dans le sous-système de transcription audio (201), premièrement une phase d'écoute et de traitement mental (600) et deuxièmement un traitement de transcription (501) sont réalisés, l'estampille temporelle de début $t_{jB}$ et l'estampille temporelle de fin $t_{jE}$ sont estimées respectivement comme étant $t_{jB} = th_{jB} - \Delta t_{mpj}$ et $tj_E = th_{jE} - \Delta t_{mpj}$ par calcul d'un retard de traitement mental $\Delta t_{mpj}$, $th_{jB}$ est une référence temporelle estampillée pour le début de la transcription du fragment audio j et $th_{jE}$ est une référence temporelle estampillée pour la fin de la transcription du fragment audio j, les deux temps étant donnés automatiquement par le sous-système de transcription audio (201) par rapport à l'horloge de référence (100),

le retard de traitement mental $\Delta t_{mpj}$ étant calculé par le sous-système de transcription audio (201) comme étant $\Delta t_{mpj} = TextLength_j \cdot (K/\mu) + C$, $TextLength_j$ étant une longueur en unités de longueur du fragment audio comprimé j, K est la durée d'une unité de longueur ; C est une constante de temps configurable dans le sous-système de transcription audio (201), et $\mu$ est un degré de littéralité variable, $0 \leq \mu \leq 1$, qui est configurable et représente la proximité de la compression à la littéralité,

la synchronisation de paquets PES de sous-titre avec des paquets audio comprenant retarder chaque paquet PES de sous-titre par association de celui-ci à une estampille temporelle de présentation dans le flux de transport synchronisé qui est égale à $PTS_i - \Delta t_i + REST$, et retarder chaque paquet audio par association de celui-ci à une estampille temporelle de présentation dans le flux de transport synchronisé qui est égal à $PTS_j + REST$, $PTS_i$ et $PTS_j$ étant les estampilles temporelles de présentation dans le flux de transport étendu et REST étant le retard de décalage associé du flux de transport étendu.

2. Procédé selon la revendication 1, dans lequel, si le flux de transport étendu comprend au moins un paquet vidéo ou au moins un paquet de données d'une classe quelconque de données aptes être synchronisées avec des paquets audio, la synchronisation de paquets de sous-titre comprend en outre retarder tous les paquets vidéo et de données d'un temps fonction du retard de décalage associé configurable REST.

3. Procédé selon l'une quelconque des revendications 1 à 2, dans lequel la synchronisation de paquets de sous-titre avec des paquets audio est réalisée avant la transmission du flux de transport synchronisé à un dispositif de réception numérique.

4. Procédé selon la revendication 3, qui comprend recevoir le flux de transport synchronisé dans le dispositif de réception numérique, qui est un récepteur classique choisi parmi un récepteur de radiodiffusion numérique, un module de décodage de télévision numérique terrestre, un récepteur de télévision sur IP, un récepteur numérique de diffusion multimédia et un récepteur numérique de média avec des moyens de commande pour une télévision en direct.

5. Procédé selon l'une quelconque des revendications 1 à 2, dans lequel la synchronisation de paquets de sous-titre avec des paquets audio est réalisée après la réception du flux de transport étendu dans un dispositif de réception numérique.

6. Procédé selon la revendication 5, qui comprend recevoir le flux de transport étendu dans le dispositif de réception numérique, qui est choisi parmi un récepteur de radiodiffusion numérique, un module de décodage de télévision numérique terrestre, un récepteur de télévision sur IP, un récepteur numérique de diffusion multimédia et un récepteur numérique de média avec des moyens de commande pour une télévision en direct.

7. Procédé selon l'une quelconque des revendications 1 à 2, dans lequel la synchronisation de paquets de sous-titre avec des paquets audio est réalisée avant le stockage du flux de transport synchronisé dans un support de stockage multimédia.

8. Procédé selon l'une quelconque des revendications 1 à 2, dans lequel la synchronisation de paquets de sous-titre avec des paquets audio est réalisée après le stockage du flux de transport étendu dans un support de stockage multimédia et avant la transmission du flux de transport synchronisé à un réseau de distribution multimédia, qui est choisi parmi un réseau IP, un réseau de diffusion de télévision numérique terrestre et un réseau de radiodiffusion numérique.

**FIG. 1**

EP 2 574 054 B1

FIG. 2

FIG. 3

FIG. 4

FIG. 5

**FIG. 6**

**FIG. 7**

FIG. 8

FIG. 9

FIG. 10

EP 2 574 054 B1

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006211636 A

- JP 2010081141 A

**Non-patent literature cited in the description**

- **PABLO ROMERO-FRESCO.** More haste less speed: Edited versus verbatim respoken subtitles. *Vigo International Journal of Applied Linguistics,* 01 January 2009, (6), 109-134